# EUROPÄISCHE PATENTSCHRIFT

(11) **EP 2 728 699 B1**
(45) Veröffentlichungstag und Bekanntmachung des Hinweises auf die Patenterteilung: **01.06.2016**
(21) Anmeldenummer: 12007460.4
(22) Anmeldetag: 30.10.2012
(51) Int. Cl.: H02J 7/00, H04M 1/725, H04W 88/00, G06F 1/16, F16M 11/04, B60R 11/02, H04B 1/38

(54) **System aus einem tragbaren, akkubetriebenem Gerät und einer Ladevorrichtung für das Gerät**
System comprising a portable, battery-operated device and a charging device for the device
Système composé d'un appareil portatif pouvant fonctionner sur batterie et d'un dispositif de charge pour l'appareil

(43) Veröffentlichungstag der Anmeldung: 07.05.2014
(73) Patentinhaber: Gigaset Communications GmbH, 40549 Düsseldorf (DE)
(72) Erfinder: Trummer, Frank, 46282 Dorsten (DE); Elting, Ralf, 46499 Hamminkeln (DE)
(74) Vertreter: Michalski Hüttermann & Partner Patentanwälte mbB

(56) Entgegenhaltungen:
- DE-A1- 10 034 695
- DE-A1- 19 845 106
- DE-A1-102011 017 269
- US-A- 5 943 628
- US-A- 6 104 923
- US-A1- 2002 039 417
- US-A1- 2005 231 464
- US-A1- 2010 069 130

## Beschreibung

Die vorliegende Erfindung betrifft ein System aus einem tragbaren, akkubetriebenem Gerät und einer Lade- und/oder Kommunikationsvorrichtung für das Gerät, wobei das Gerät einen Trageclip und Ladekontakte aufweist und die Ladevorrichtung mit einem Kontaktbereich versehen ist, in den das Gerät mit seinen Ladekontakten zum Aufladen durch die Ladevorrichtung einsetzbar ist.

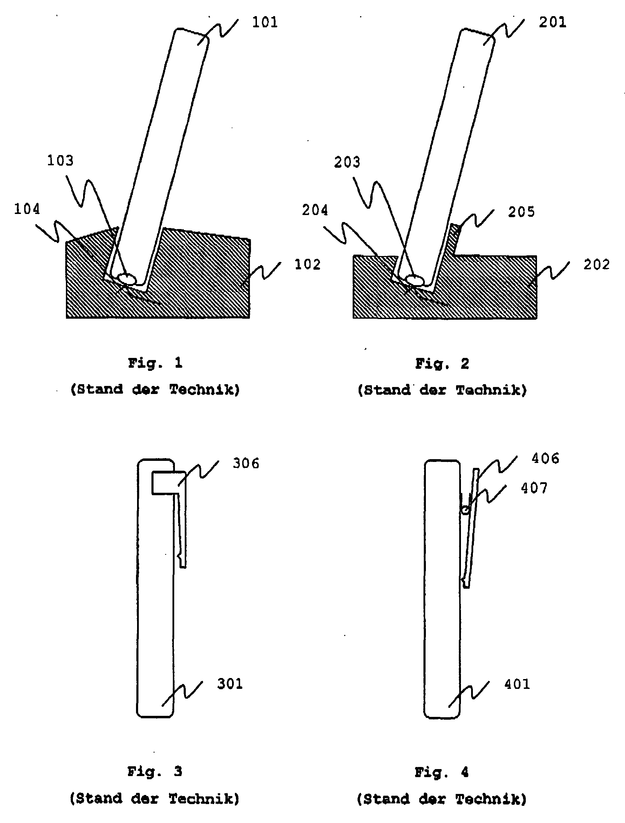

Allgemein bekannt und im Handel erhältlich sind schnurlose Telefone. Zum Lieferumfang solcher Telefone gehört üblicherweise eine Basisstation, die mit dem Telefonanschluss verbunden ist, sowie ein schnurloses, tragbares Handgerät, auch Mobilteil genannt. Um den Tragekomfort eines solchen Mobilteils zu erhöhen, sind manche Mobilteile mit einem Gürtel- oder Ansteck-Clip, auch Trageclip genannt, ausgestattet (Fig. 3 und 4, Stand der Technik). Mit Hilfe dieser Clips kann das Mobilteil bspw. an einem Gürtel, an der Tasche eines Oberhemds oder am Revers der Oberbekleidung befestigt werden.

Mobilteile werden üblicherweise mit wiederaufladbaren Batterien, auch Akkus bzw. Akkumulatoren genannt, betrieben und durch Auflegen, Einlegen, Einstellen oder Einsetzen, im Folgenden nur noch kurz als "einlegen" oder "Einsetzen" bezeichnet, in einen entsprechenden Bereich in der Basis, meistens als Lademulde ausgestaltet ist, geladen. Die Lademulde weist hierbei elektrische Ladekontakte auf, mittels derer das eingelegte Mobilteil geladen wird. Allgemein bekannt und im Handel auch separat erhältlich sind ferner schurlose Telefone bzw. Erweiterungssets, bei denen das Laden der Mobilteile nicht mittels einer Basisstation, sondern mittels einer separaten Vorrichtung, der sogenannten Ladeschale, erfolgt. Die Ladeschale weist hierbei ebenfalls eine Lademulde mit elektrischen Ladekontakten auf.

Die Ausgestaltung der der Lademulde sowie des Bereichs des Mobilteils, der in die Lademulde eingelegt wird, erfolgt so, dass das Mobilteil komfortabel in die Lademulde eingelegt und herausgenommen werden kann (Fig. 1, Stand der Technik). Je nach Designanforderungen kann hier eine eher aufrechte Position des Mobilteils im eingelegten Zustand oder auch eine eher liegende Position des Mobilteils realisiert sein. Um ein Herauskippen des Mobilteils aus der Lademulde insbesondere bei Lademulden mit geringer Tiefe und gewünschter aufrechter Position des Mobilteils zu verhindern, kann auch ein Stützelement für das Mobilteil am Rand der Lademulde vorgesehen sein (Fig. 2, Stand der Technik).

Beim Einlegen eines Mobilteils in die Lademulde von Basisstation oder Ladeschale kommen die am Mobilteil vorgesehenen elektrischen Ladekontakte mit den in der Lademulde der vorgesehenen elektrischen Ladekontakten in Kontakt, so dass ein Ladestrom über diese Kontakte fließen kann.

Die Kontakte sind hierbei meist entweder auf Seiten der Lademulde oder auf Seiten des Mobilteils als federnde Elemente ausgebildet, es sind jedoch auch federnde Kontaktelemente auf beiden Seiten denkbar. Durch die Verwendung von federnden Kontaktelementen wird sichergestellt, dass auch bei nicht exakt in die Lademulde eingelegten Mobilteilen oder bei nicht perfekt aufeinander abgestimmten Formen von Mobilteil und Lademulden ein gut elektrisch leitfähiger Kontakt hergestellt wird. Die für eine sicherere Kontaktierung notwendige Kontaktkraft wird durch die Gewichtskraft des Mobilteils aufgebracht.

Die Federkraft der federnden Kontaktelemente sollte hierbei so gewählt werden, dass sich bei eingelegtem Mobilteil einerseits eine möglichst hohe Kontaktkraft ergibt um einen möglichst guten elektrischen Kontakt zu gewährleisten, andererseits das Mobilteil aber nicht in der Lademulde angehoben oder sogar aus der Lademulde herausgedrückt wird. Um letztere Bedingung einzuhalten, muss die Federkraft unterhalb der Gewichtskraft des Mobilteils liegen.

Aus der deutschen Patentanmeldung DE 19845106 A1 ist eine Ladeschale für Mobiltelefone bekannt, die eine Vertiefung aufweist, die einen Gürtelclip eines Mobiltelefons aufnehmen kann, bzw. in die ein Gürtelclip eines Mobiltelefons eingerastet werden kann.

Das US-Patent US 5,943,628 beschreibt einen Annäherungssensor für ein schnurloses Telefon, wobei dieser eine an einem Gürtel zu befestigende, erste Einheit und eine am schnurlosen Telefon befindliche, zweite Einheit umfasst. Die Befestigung der ersten Einheit am Gürtel wird mittels eines Gürtelclips bewerkstelligt. Das schnurlose Telefon kann dann mit Hilfe der am Telefon befindlichen Einheit in die am Gürtel befestigte Einheit eingehängt werden, woraufhin ein elektrischer Kontakt zwischen der am Telefon befindlichen Einheit und der am Gürtel befindlichen Einheit hergestellt wird. Über diesen Kontakt können die Einheiten das Einhängen des Telefons detektieren und hierauf reagieren.

Aus der US-Patentanmeldung US 2010/0069130 A1 ist ferner eine Kombination aus einem Telefonhalter und einem schnurlosen Ohrhörer bekannt, wobei der Telefonhalter eine Haltevorrichtung für den schnurlosen Ohrhörer aufweist. US 2010/0069130 A1 offenbart eine Vielzahl von verschiedenen Varianten von Halter und Ohrhörer. In einer der Ausführungsformen weist der Ohrhörer einen Halteclip sowie elektrische Kontakte auf, wobei zwecks Kontaktherstellung der Halteclip des Ohrhörers in einen entsprechende, tiefe Ausnehmung des Halters gesteckt wird, woraufhin die außenliegenden elektrischen Kontakte des Halters mit denen des Ohrhörers in Kontakt treten.

Die eingangs beschriebene Konstruktion von Lademulden und Mobilteilen stößt jedoch insbesondere dann an ihre Grenzen, wenn das Gewicht des Mobilteils gewisse Grenzen unterschreitet. In der Praxis hat sich gezeigt, dass eine sichere Kontaktierung bei einem Mobilteilgewicht (Gewicht des betriebsbereiten Geräts einschließlich Akkus) von ca. 50g und darunter, insbesondere von ca. 40g und darunter, problematisch ist.

Ein allgemein bekannter Lösungsansatz für solche Fälle ist, die Oberflächen der Kontakte des Mobilteils und/oder der Lademulde zu modifizieren. Hier hat sich gezeigt, dass bspw. eine Vergoldung der Oberflächen die notwendige Kontaktkraft reduziert und somit auch Mobilteile mit einem Gewicht von ca. 20-30g noch verlässlich geladen werden können. Nachteilig sind jedoch die erhöhten Kosten für die Verwendung vergoldeter oder anderweitig beschichteter oder modifizierter Kontaktflächen.

Ein weiterer, bekannter Lösungsansatz ist, die Ladeschale bzw. das Mobilteil mit einem Stecker-Buchse-System auszustatten. Hierbei wird aus praktischen Gründen meist in der Lademulde ein Stecker vorgesehen und im Mobilteil eine entsprechende Buchse; eine umgekehrte Ausstattung ist jedoch ebenfalls denkbar. Nachteilig ist hier neben den erhöhten Kosten der Stecker-Buchse-Kombination auch der eingeschränkte Benutzerkomfort, da sowohl das Einlegen bzw. Einstecken des Mobilteils in die Lademulde, als auch das Herausnehmen bzw. Herausziehen des Mobilteils aus der Mulde einen gewissen Kraftaufwand erfordert. Um zu verhindern, dass beim Versuch des Herausnehmens bzw. Herausziehens des Mobilteils auch die Basisstation oder die Ladeschale mit angehoben wird, müssen diese zweckmäßigerweise noch ggf. mit entsprechenden Gewichten ausgestattet werden, die ebenfalls Mehrkosten nach sich ziehen. Alternativ kann der Benutzer die Basisstation oder die Ladeschale beim Herausnehmen bzw. Herausziehen des Mobilteils mit der zweiten Hand festhalten, was jedoch den Benutzungskomfort massiv einschränkt.

Ein weiterer, bekannter Lösungsansatz ist, Mobilteile und/oder Mobiltelefone direkt und ohne Verwendung einer Ladeschale über ein anzusteckendes Kabel zu laden; solche Kabel werden vielfach neben dem Laden des Gerätes auch zur Kommunikation mit einem Computer bspw. zum Datenabgleich verwendet. Auch dieser Lösungsansatz ist für den Benutzer jedoch nachteilig, da er auch hier zum Herstellen und Trennen der Verbindung eine zweite Hand benötigt.

Es ist daher die Aufgabe der vorliegenden Erfindung, eine einfach handhabbare Möglichkeit anzugeben, wie leichte Mobilteile zuverlässig kontaktiert und geladen werden können und eine einfache und komfortable Trennbarkeit von der Ladeschale gewährleistet wird.

Gelöst wird diese Aufgabe durch ein System gemäß Anspruch 1. Bevorzugte Weiterbildungen des erfindungsgemäßen Systems finden sich in den Unteransprüchen sowie der nachfolgenden Beschreibung.

Unter einer Ladevorrichtung wird hier eine Vorrichtung verstanden, die zum Laden eines akkubetriebenen Gerätes dient, während unter einer Kommunikationsvorrichtung eine Vorrichtung verstanden wird, die zur Kommunikation mit dem akkubetriebenen Gerät dient und bspw. an einen Computer zwecks Datenabgleich zwischen Computer und Gerät angeschlossen wird oder auch selbständig mit dem Gerät kommuniziert. Unter einer Lade- und/oder Kommunikationsvorrichtung wird eine Ladevorrichtung oder eine Kommunikationsvorrichtung oder eine Vorrichtung die sowohl zum Laden des Geräts als auch zur Kommunikation mit dem Gerät dient, verstanden. Der Einfachheit halber wird im Folgenden zumeist auf eine Ladevorrichtung mit Ladekontakten eingegangen. Entsprechendes gilt aber analog auch für eine Kommunikationsvorrichtung mit Kommunikationskontakten.

In vorteilhafter Weise ist es durch die erfindungsgemäße Gestaltung von Lade- und/oder Kommunikationsvorrichtung und akkubetriebenem Gerät bzw. der Kombination dieser möglich, auch leichte Geräte zuverlässig zu kontaktieren und insbesondere zu laden, und dem Benutzer gleichzeitig ein hohes Maß an Bedienungskomfort beim Trennen von Lade- und/oder Kommunikationsvorrichtung und akkubetriebenem Gerät zu bieten. Ein weiterer Vorteil ist dadurch gegeben, dass keine besonderen und kostspieligen Maßnahmen zur Verbesserung der Leitfähigkeit der Oberflächen der elektrischen Kontakte wie z.B. Vergolden oder anderweitiges Beschichten oder sonstiges Modifizieren der Kontaktflächen notwendig sind.

Erfindungsgemäß wird eine Lade- und/oder Kommunikationsvorrichtung mit einem Kontaktbereich zum Kontaktieren von akkubetriebenen, tragbaren Geräten vorgeschlagen, bei der die Lade- und/oder Kommunikationsvorrichtung ein Halteelement aufweist, das derart ausgestaltet ist, dass ein Trageclip eines zu kontaktierenden Gerätes mit dem Halteelement der Lade- und/oder Kommunikationsvorrichtung kraft- und/oder formschlüssig verbunden werden kann. Der Trageclip ist dabei so konstruiert, dass bei Ausübung von Druck auf den der Lade- und/oder Kommunikationsvorrichtung abgewandten Bereich des Trageclips der der Lade- und/oder Kommunikationsvorrichtung zugewandte Bereich des Trageclips vom Gerät weg bewegt und eine ggf. bestehende Verbindung zwischen Trageclip und Halteelement aufgehoben wird.

Hierdurch wird vorteilhaft erreicht, dass die Lade- und/oder Kommunikationsvorrichtung und das tragbare Gerät nicht nur durch die Wirkung der Schwerkraft, sondern zusätzlich durch mechanische Wirkung miteinander verbunden werden und somit eine verbesserte elektrische Kontaktierung zwischen dem Lade- und/oder Kommunikationsvorrichtung und dem tragbarer Gerät ermöglicht wird und ein einfaches und komfortables Lösen des Geräts von der Lade- und/oder Kommunikationsvorrichtung ermöglicht wird.

In einer bevorzugten Ausgestaltung der Erfindung wird das Halteelement der Lade- und/oder Kommunikationsvorrichtung so gestaltet, dass auf das mit dem Halteelement verbundene Gerät eine Kraft ausgeübt werden kann, die wenigstens teilweise in Richtung des Kontaktbereichs wirkt. Hierdurch können zwischen Lade- und/oder Kommunikationsvorrichtung und Gerät Kontaktkräfte wirken, die über die reine Gewichtskraft des Gerätes hinausgehen und somit eine verbesserte elektrische Kontaktierung zwischen Lade- und/oder Kommunikationsvorrichtung und Gerät ermöglichen.

In einer weiteren bevorzugten Ausgestaltung der Erfindung werden in der Lade- und/oder Kommunikationsvorrichtung federnde Kontaktelemente vorgesehen, deren Federkraft der durch das Halteelement auf das Gerät ausgeübten Kraft zumindest teilweise entgegenwirkt. Hierdurch wird die durch das Halteelement ermöglichte, erhöhte Kraft besser ausgenutzt und erhöhte Toleranzen bei der Fertigung bzw. beim Zusammenspiel von Lade- und/oder Kommunikationsvorrichtung und dem Gerät werden ermöglicht.

In einer weiteren bevorzugten Ausgestaltung der Erfindung weist das Halteelement der Lade- und/oder Kommunikationsvorrichtung auf der dem Trageclip des zu ladenden Gerätes zugewandten Seite zumindest in einem Teilabschnitt einen keilartigen Querschnitt auf, wobei der schmale Bereich des Keils von der Lade- und/oder Kommunikationsvorrichtung weg weist und der breite Bereich des Keils zur Lade- und/oder Kommunikationsvorrichtung hin weist. Hierdurch wird erreicht, dass einerseits der Benutzer das Gerät einfach auf die Lade- und/oder Kommunikationsvorrichtung aufstecken bzw. einlegen kann (der Trageclip des Geräts kommt mit dem schmalen Bereich des Keils zuerst in Berührung und kann somit einfach weitergeschoben werden) und andererseits nach Einrasten des Trageclips hinter dem breiten Bereich des Keils durch eine formschlüssige Verbindungskomponente eine sehr gute Kraftwirkung erreicht wird.

In einer weiteren Ausgestaltung der Erfindung weist das Halteelement der Lade- und/oder Kommunikationsvorrichtung auf der dem Trageclip des zu ladenden Gerätes zugewandten Seite eine oder mehrere Hervorhebungen mit im Wesentlichen rippen-, halbkreis- bzw. halbellipsenförmigem Querschnitt auf. Diese Ausführungsform bietet wie die vorangegangene Ausführungsform eine formschlüssige Verbindungskomponente und ermöglicht ebenfalls ein einfaches Aufstecken bzw. Einlegen des Gerätes, jedoch sind die Vorteile hier geringer als bei der oben dargestellten keilförmigen Ausgestaltung.

In einer weiteren Ausgestaltung der Erfindung weist das Halteelement der Lade- und/oder Kommunikationsvorrichtung auf der dem Trageclip des zu ladenden Gerätes zugewandten Seite zumindest teilweise eine geriffelte, gewellte und/oder gummierte Oberfläche auf. Die Vorteile entsprechen denen der vorangegangenen Ausgestaltung, auch hier sind die Vorteile geringer als bei der weiter oben dargestellten keilförmigen Ausgestaltung.

Erfindungsgemäß wird ferner ein akkubetriebenes, tragbares Gerät vorgeschlagen, das einen Trageclip aufweist, der derart ausgestaltet ist, dass dieser mit einem Halteelement einer Lade- und/oder Kommunikationsvorrichtung kraft- und/oder formschlüssig verbunden werden kann. Hierdurch wird vorteilhaft erreicht, dass die Lade- und/oder Kommunikationsvorrichtung und das tragbare Gerät nicht nur durch die Wirkung der Schwerkraft, sondern auch durch mechanische Wirkung miteinander verbunden werden und somit eine verbesserte elektrische Kontaktierung zwischen dem Lade- und/oder Kommunikationsvorrichtung und dem tragbarer Gerat ermöglicht wird.

In einer vorteilhaften Ausgestaltung der Erfindung weist das Gerät einen Trageclip auf, der so gestaltet ist, dass auf das mittels des Trageclips mit dem Halteelement einer Lade- und/oder Kommunikationsvorrichtung verbundene Gerät eine Kraft ausgeübt werden kann, die wenigstens teilweise in Richtung der Lade- und/oder Kommunikationsvorrichtung wirkt. Hierdurch können zwischen Lade- und/oder Kommunikationsvorrichtung und Gerät Kontaktkräfte wirken, die über die reine Gewichtskraft des Gerätes hinausgehen und somit eine verbesserte elektrische Kontaktierung zwischen Lade- und/oder Kommunikationsvorrichtung und Gerät ermöglichen.

In einer weiteren vorteilhaften Ausgestaltung der Erfindung sind im Gerät federnde Kontaktelemente vorhanden, deren Federkraft der über den Trageclip des Gerätes und das Halteelement der Lade- und/oder Kommunikationsvorrichtung auf das Gerät ausgeübten Kraft zumindest teilweise entgegenwirkt. Hierdurch wird die durch das Halteelement ermöglichte, erhöhte Kraft besser ausgenutzt und erhöhte Toleranzen bei der Fertigung bzw. beim Zusammenspiel von Lade- und/oder Kommunikationsvorrichtung und dem Gerät werden ermöglicht.

In einer weiteren vorteilhaften Ausgestaltung der Erfindung ist der Trageclip so konstruiert, dass eine Kraft auf den der Lade- und/oder Kommunikationsvorrichtung zugewandten Bereich des Trageclips wirkt, die zum Gerät hin weist. Hierdurch erhält die bei aufgestecktem bzw. eingelegtem Gerät bestehende Verbindung zwischen Trageclip und Haltevorrichtung eine kraftschlüssige Komponente und wird damit verbessert. Ferner wird eine eventuell bestehende formschlüssige Komponente der Verbindung, wie sie bspw. durch das Zusammenspiel zwischen einem keilförmigem Teilabschnitt der Haltevorrichtung und einer Hervorhebung am Trageclip erreicht werden kann, gesichert und somit verbessert. Bei ausreichend hoher Gestaltung der Kraft kann die formschlüssige Komponente der Verbindung verringert werden oder auch weitgehend entfallen; es sind somit auch geriffelte, gewellte, gummierte oder sogar annähernd glatte Oberflächen von Haltevorrichtung und/oder Trageclip realisierbar.

In einer weiteren vorteilhaften Ausgestaltung der Erfindung weist der Trageclip auf der dem Halteelement der Lade- und/oder Kommunikationsvorrichtung zugewandten Seite zumindest in einem Teilabschnitt einen keilartigen Querschnitt auf, wobei der schmale Bereich des Keils zur Lade- und/oder Kommunikationsvorrichtung hin weist und der breite Bereich des Keils von der Lade- und/oder Kommunikationsvorrichtung weg weist. Hierdurch wird erreicht, dass einerseits der Benutzer das Gerät einfach auf die Lade- und/oder Kommunikationsvorrichtung aufstecken bzw. einlegen kann (die Haltevorrichtung des Geräts kommt mit dem schmalen Bereich des Keils zuerst in Berührung und kann somit einfach weitergeschoben werden) und andererseits nach Einrasten der Haltevorrichtung hinter dem breiten Bereich des Trageclips durch eine formschlüssige Verbindungskomponente eine sehr gute Kraftwirkung erreicht wird.

In einer weiteren vorteilhaften Ausgestaltung der Erfindung weist der Trageclip auf der dem Halteelement der Lade- und/oder Kommunikationsvorrichtung zugewandten Seite eine oder mehrere Hervorhebungen mit im Wesentlichen rippen-, halbkreis- bzw. halbellipsenförmigem Querschnitt auf. Diese Ausführungsform bietet wie die vorangegangene Ausführungsform eine formschlüssige Verbindungskomponente und ermöglicht ebenfalls ein einfaches Aufstecken bzw. Einlegen des Gerätes, jedoch sind die Vorteile betreffend die Verbindung zwischen Halteelement und Trageclip hier geringer als bei der oben dargestellten keilförmigen Ausgestaltung. Vorteile ergeben sich jedoch daraus, dass ein derart gestaltete Hervorhebung kaum dazu neigt, sich beim Tragen des Geräts an der Kleidung zu verhaken.

Es hat sich gezeigt, dass die Kombination aus einer Gestaltung des Haltelements mit einem Abschnitt mit keilförmigem Querschnitt mit einer im Wesentlichen abgerundeten Hervorhebung am Trageclip die jeweiligen Vorteile am besten vereinigt.

In einer weiteren vorteilhaften Ausgestaltung der Erfindung weist der Trageclip auf der dem Halteelement der Lade- und/oder Kommunikationsvorrichtung zugewandten Seite zumindest teilweise eine geriffelte, gewellte und/oder gummierte Oberfläche auf. Die Vorteile entsprechen denen der vorangegangenen Ausgestaltung, auch hier sind die Vorteile geringer als bei der weiter oben dargestellten keilförmigen Ausgestaltung.

Die Erfindung wird nachfolgend anhand von Figuren weiter erläutert.
Fig. 1 zeigt eine Ladevorrichtung und ein darin eingestecktes bzw. eingelegtes Mobilteil gemäß dem Stand der Technik (Schnittansicht);
Fig. 2 zeigt eine Ladevorrichtung in alternativer Ausgestaltung und ein darin eingestecktes bzw. eingelegtes Mobilteil gemäß dem Stand der Technik (Schnittansicht);
Fig. 3 zeigt ein Mobilteil mit Trageclip gemäß dem Stand der Technik (Seitenansicht);
Fig. 4 zeigt ein Mobilteil mit einem alternativen Trageclip gemäß dem Stand der Technik (Seitenansicht);
Fig. 5 zeigt eine erfindungsgemäß gestaltete Ladevorrichtung in die ein erfindungsgemäß gestaltetes Mobilteil eingesteckt bzw. eingelegt ist (Schnittansicht);
Fig. 6 zeigt eine erfindungsgemäß gestaltete Ladevorrichtung in die ein erfindungsgemäß gestaltetes Mobilteil eingesteckt bzw. eingelegt ist, wobei die Ladevorrichtung eine alternative Gestaltung der Haltevorrichtung aufweist (Schnittansicht);
Fig. 7 zeigt eine erfindungsgemäß gestaltete Ladevorrichtung in die ein erfindungsgemäß gestaltetes Mobilteil eingesteckt bzw. eingelegt ist, wobei die Haltevorrichtung sowie der Trageclip alternativ gestaltet sind (Schnittansicht);
Fig. 8 zeigt weitere Gestaltungsalternativen (Schnittansicht).

Fig. 1 zeigt eine Ladevorrichtung 102 und ein darin eingestecktes bzw. eingelegtes Mobilteil 101 gemäß dem Stand der Technik (Schnittansicht). Schematisch dargestellt sind ferner Ladekontaktfedern 104 der Ladevorrichtung sowie Ladekontakte 103 des Mobilteils. Eine solche Konstruktion eignet sich wie eingangs erläutert nur zum Laden von Mobilteilen mit einem gewissen Mindestgewicht, da auf die Kontaktfedern lediglich die Gewichtskraft des Mobilteils auf die Kontaktfedern drückt.

Fig. 2 zeigt eine Ladevorrichtung 202 in alternativer Ausgestaltung und ein darin eingestecktes bzw. eingelegtes Mobilteil 201 gemäß dem Stand der Technik (schnittansicht). Im Unterschied zu Fig. 2 ist hier die Ladevorrichtung flacher gehalten. Um zu verhindern, dass das Mobilteil aus der Ladevorrichtung kippt, ist zusätzlich ein Stützelement 205 vorgesehen. Die zu Fig. 1 beschriebenen Anforderungen an das Mobilteilgewicht gelten entsprechend auch hier.

Fig. 3 zeigt ein Mobilteil 301 mit Trageclip 306 gemäß dem Stand der Technik (Seitenansicht). Der Trageclip dient zum mitführen des Geräts bspw. am Gürtel oder am Revers der Kleidung. Der Trageclip kann sowohl steif als auch rückfedernd ausgeführt sein.

Fig. 4 zeigt ein Mobilteil 401 mit einem alternativen Trageclip 406 gemäß dem Stand der Technik (Seitenansicht). Hier ist der Trageclip federnd mit dem Mobilteilgehäuse verbunden, die Federkraft wird von der Feder 407 aufgebracht. Bei Druck auf den Trageclip an der oberen Seite des Geräts hebt sich der gegenüberliegende Teil des Trageclips vom Mobilteil ab und ermöglicht ein einfaches Anstecken an die Kleidung.

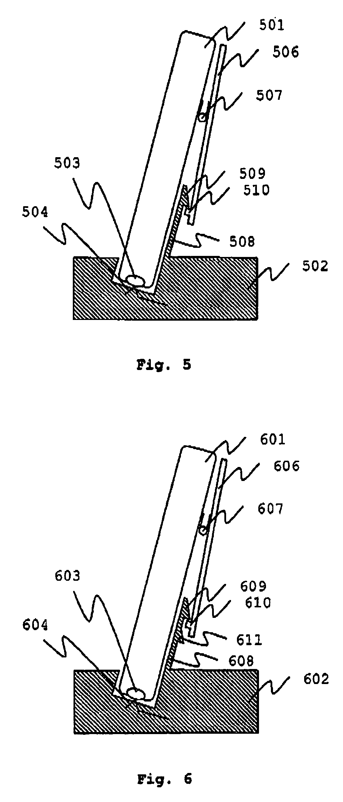

Fig. 5 zeigt eine erfindungsgemäß gestaltete Ladevorrichtung 502 in die ein erfindungsgemäß gestaltetes Mobilteil 501 eingesteckt bzw. eingelegt ist (Schnittansicht). Weiterhin dargestellt ist eine Haltevorrichtung 508 mit einem in einem Teilabschnitt keilförmigen Querschnitt 509 sowie Kontaktfedern 504 der Ladevorrichtung 502. Desweiteren dargestellt sind ein am Mobilteil 501 montierter Trageclip 506, eine Feder 507 sowie eine Hervorhebung 510 am Trageclip, wobei die Hervorhebung 510 hier mit rechteckigem bzw. rippenförmigem Querschnitt dargestellt ist, es sind aber auch Hervorhebungen mit anderen Querschnitten geeignet, bspw. halbkreisförmige, halbellipsenförmige oder anderweitig abgerundete. Weiterhin dargestellt sind Kontakte 503 des Mobilteils 501.

Wie der Darstellung zu entnehmen, befindet sich das Mobilteil in einem in die Ladevorrichtung eingestecktem bzw. eingelegtem Zustand. Die Hervorhebung 510 greift hinter den keilförmigen Teilabschnitt der Haltevorrichtung, so dass eine formschlüssige Verbindung entsteht. Diese formschlüssige Verbindung wird gesichert durch die Federkraft der Feder 507, mit der der Trageclip gegen die Haltevorrichtung der Ladevorrichtung gedrückt wird.

Durch die bestehende formschlüssige Verbindung und die hierüber mögliche Kraftübertragung können die Kontaktfedern 504 mit einer wesentlich über die reine Gewichtskraft des Mobilteils hinausgehenden Federkraft ausgestattet werden, da das Mobilteil über die genannte Verbindung daran gehindert wird, aus der Ladevorrichtung herausgedrückt zu werden. Durch die höhere Federkraft wird eine gute elektrische Kontaktierung sichergestellt. Die Kontaktfedern 504 der Ladevorrichtung 502 werden durch das eingesteckte bzw. eingelegte Mobilteil leicht heruntergedrückt, dies ist jedoch in der Figur nicht dargestellt.

Gelöst werden kann die Verbindung durch Drücken auf den oberen Bereich des Trageclips; hierdurch wird der untere Bereich des Trageclips von der Haltevorrichtung wegbewegt und die formschlüssige Verbindung wieder freigegeben.

Fig. 6 zeigt eine erfindungsgemäß gestaltete Ladevorrichtung 602 in die ein erfindungsgemäß gestaltetes Mobilteil 601 eingesteckt bzw. eingelegt ist, wobei die Ladevorrichtung eine Haltevorrichtung 608 aufweist, die in zwei Teilabschnitten 609 und 611 keilförmige Querschnitte aufweist. Diese Ausgestaltung hat den Vorteil, dass Mobilteile mit unterschiedlich ausgeführten, insbesondere unterschiedlich langen Trageclips verwendet werden können. Wie ersichtlich ist, würde die Hervorhebung eines Mobilteils mit längerem Trageclip statt hinter den Teilabschnitt 609 hinter den Teilabschnitt 611 greifen.

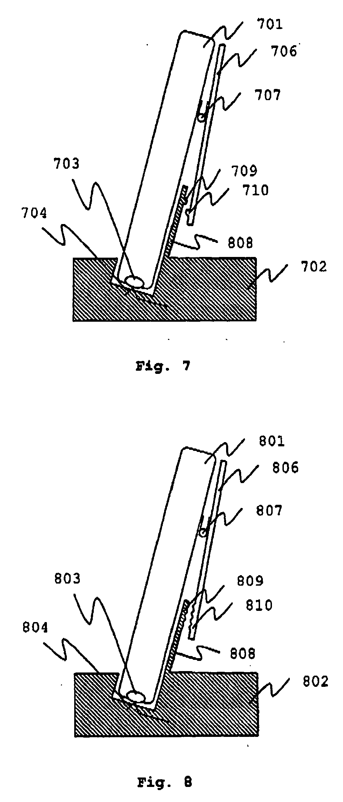

Fig. 7 zeigt eine erfindungsgemäß gestaltete Ladevorrichtung 702 in die ein erfindungsgemäß gestaltetes Mobilteil 701 eingesteckt bzw. eingelegt ist, wobei die Haltevorrichtung 708 sowie der Trageclip 706 alternativ gestaltet sind: hier weist sowohl der Trageclip 706 des Mobilteils als auch die Haltevorrichtung 708 der Ladevorrichtung einen halbkreis- bzw. halbellipsenförmigen Querschnitt 709 bzw. 710 auf.

Fig. 8 zeigt eine erfindungsgemäß gestaltete Ladevorrichtung 802 in die ein erfindungsgemäß gestaltetes Mobilteil 801 eingesteckt bzw. eingelegt ist, wobei die Haltevorrichtung 808 sowie der Trageclip 806 alternativ gestaltet sind: hier weist sowohl der Trageclip 806 des Mobilteils als auch die Haltevorrichtung 808 der Ladevorrichtung eine in einem Teilabschnitt 809 bzw. 810 geriffelte bzw. gewellte Oberfläche auf.

Wie eingangs erwähnt, können auch unterschiedlich gestaltete Haltevorrichtungen mit unterschiedlich gestalteten Trageclips vorteilhaft zusammenspielen; Figur 7 und Figur 8 sind insofern nicht dahingehend zu interpretieren, dass nur Kombinationen aus jeweils gleich gestalteten Hervorhebungen von Haltevorrichtung und Trageclip zum erfindungsgemäßen Effekt führen.

**BEZUGSZEICHENLISTE**

| | |
|---|---|
| Tragbares, akkubetriebenes Gerät | 101 |
| Ladevorrichtung | 102 |
| Ladekontakt des Gerätes | 103 |
| Ladekontakt der Ladevorrichtung (Ausführung als Feder) | 104 |
| | |
| Tragbares, akkubetriebenes Gerät | 201 |
| Ladevorrichtung | 202 |
| Ladekontakt des Gerätes | 203 |
| Ladekontakt der Ladevorrichtung (Ausführung als Feder) | 204 |
| Stützelement | 205 |
| | |
| Tragbares, akkubetriebenes Gerät | 301 |
| Trageclip | 306 |
| | |
| Tragbares, akkubetriebenes Gerät | 401 |
| Trageclip | 406 |
| Feder | 407 |
| | |
| Tragbares, akkubetriebenes Gerät | 501 |
| Ladevorrichtung | 502 |
| Ladekontakt des Gerätes | 503 |
| Ladekontakt der Ladevorrichtung (Ausführung als Feder) | 504 |
| Trageclip | 506 |
| Feder | 507 |
| Haltevorrichtung | 508 |
| Keilförmiger Teilabschnitt der Haltevorrichtung | 509 |
| Hervorhebung am Trageclip | 510 |
| | |
| Tragbares, akkubetriebenes Gerät | 601 |
| Ladevorrichtung | 602 |
| Ladekontakt des Gerätes | 603 |
| Ladekontakt der Ladevorrichtung (Ausführung als Feder) | 604 |
| Trageclip | 606 |
| Feder | 607 |
| Haltevorrichtung | 608 |
| Keilförmiger Teilabschnitt der Haltevorrichtung | 609 |
| Hervorhebung am Trageclip | 610 |
| Weiterer keilförmiger Teilabschnitt der Haltevorrichtung | 611 |
| | |
| Tragbares, akkubetriebenes Gerät | 701 |
| Ladevorrichtung | 702 |
| Ladekontakt des Gerätes | 703 |
| Ladekontakt der Ladevorrichtung (Ausführung als Feder) | 704 |
| Trageclip | 706 |
| Feder | 707 |
| Haltevorrichtung | 708 |
| Hervorhebung am der Haltevorrichtung | 709 |
| Hervorhebung am Trageclip | 710 |
| | |
| Tragbares, akkubetriebenes Gerät | 801 |
| Ladevorrichtung | 802 |
| Ladekontakt des Gerätes | 803 |
| Ladekontakt der Ladevorrichtung (Ausführung als Feder) | 804 |
| Trageclip | 806 |
| Feder | 807 |
| Haltevorrichtung | 808 |
| Geriffelte Oberfläche der Haltevorrichtung | 809 |
| Geriffelte Oberfläche des Trageclips | 810 |

## Patentansprüche

1. System aus einem tragbaren, akkubetriebenen Gerät (501, 601, 701, 801) und einer Lade- und/oder Kommunikationsvorrichtung (502, 602, 702, 802) für das Gerät,
wobei das Gerät einen Trageclip (506, 606, 706, 806) und elektrische Kontakte (503, 603, 703, 803) aufweist
und die Lade- und/oder Kommunikationsvorrichtung (502, 602, 702, 802) mit einem elektrischen Kontaktbereich versehen ist, in den das Gerät (501, 601, 701, 801) mit seinen Kontakten (503, 603, 703, 803) zur elektrischen Verbindung mit der Lade- und/oder Kommunikationsvorrichtung (502, 602, 702, 802) einsetzbar ist,
und die Lade- und/oder Kommunikationsvorrichtung (502, 602, 702, 802) ein Halteelement (508, 608, 708, 808) aufweist,
wobei der Trageclip (506, 606, 706, 806) des in den Kontaktbereich eingesetzten Geräts (501, 601, 701, 801) mit dem Halteelement kraft- und/oder formschlüssig verbindbar ist,
**dadurch gekennzeichnet, dass**
der Trageclip (506, 606, 706, 806) des Geräts so konstruiert ist, dass bei Ausübung von Druck auf den der Lade- und/oder Kommunikationsvorrichtung abgewandten Bereich des Trageclips (506, 606, 706, 806) der der Lade- und/oder Kommunikationsvorrichtung zugewandte Bereich des Trageclips (506, 606, 706, 806) vom Gerät (501, 601, 701, 801) weg bewegt und eine ggf. bestehende Verbindung zwischen Trageclip (506, 606, 706, 806) und Halteelement (508, 608, 708, 808) aufgehoben werden kann.

2. System nach Anspruch 1, **dadurch gekennzeichnet, dass** der Trageclip (506, 606, 706, 806) des Geräts (501, 601, 701, 801) mit dem Halteelement (508, 608, 708, 808) der Lade- und/oder Kommunikationsvorrichtung (502, 602, 702, 802) bei Einsetzen des Gerätes (501, 601, 701, 801) in die Lade- und/oder Kommunikationsvorrichtung (502, 602, 702, 802) automatisch verbunden wird.

3. System nach Anspruch 1 oder 2, **dadurch gekennzeichnet, dass** das Halteelement (508, 608, 708, 808) der Lade- und/oder Kommunikationseinrichtung (502, 602, 702, 802) so ausgestaltet ist, dass auf das eingesetzte Gerät (501, 601, 701, 801) eine Kraft ausübbar ist, die wenigstens teilweise in Richtung des Kontaktbereichs wirkt.

4. System nach einem der Ansprüche 1 bis 3, **dadurch gekennzeichnet, dass** im Kontaktbereich der Lade- und/oder Kommunikationseinrichtung (502, 602, 702, 802) wenigstens ein federndes Kontaktelement (504, 604, 704, 804) vorhanden ist, dessen Federkraft der durch das Halteelement (508, 608, 708, 808) auf das eingesetzte Gerät (501, 601, 701, 801) ausgeübten Kraft zumindest teilweise entgegenwirkt.

5. System nach einem der Ansprüche 1 bis 4, **dadurch gekennzeichnet, dass** das Halteelement der Lade- und/oder Kommunikationseinrichtung (502, 602, 702, 802) auf der dem Trageclip (506, 606, 706, 806) des Gerätes (501, 601, 701, 801) zugewandten Seite zumindest in einem Teilabschnitt einen keilartigen Querschnitt (509, 609, 611) aufweist, wobei der schmale Bereich des Keils von der Lade- und/oder Kommunikationsvorrichtung (502, 602, 702, 802) weg weist und der breite Bereich des Keils zur Lade- und/oder Kommunikationsvorrichtung (502, 602, 702, 802) hin weist.

6. System nach einem der Ansprüche 1 bis 5, **dadurch gekennzeichnet, dass** das Halteelement (508, 608, 708, 808) der Lade- und/oder Kommunikationseinrichtung (502, 602, 702, 802) auf der dem Trageclip (506, 606, 706, 806) des Gerätes zugewandten Seite eine oder mehrere Hervorhebungen, insbesondere Hervorhebungen mit im Wesentlichen rippen-, halbkreis- bzw. halbellipsenförmigem Querschnitt (709) aufweist.

7. System nach einem der Ansprüche 1 bis 6, **dadurch gekennzeichnet, dass** das Halteelement (508, 608, 708, 808) der Lade- und/oder Kommunikationseinrichtung (502, 602, 702, 802) auf der dem Trageclip (506, 606, 706, 806) des Gerätes (501, 601, 701, 801) zugewandten Seite zumindest teilweise eine geriffelte, gewellte und/oder gummierte Oberfläche (809) aufweist.

8. System nach Anspruch 1 oder 2, **dadurch gekennzeichnet, dass** der Trageclip (506, 606, 706, 806) des Geräts (501, 601, 701, 801) so gestaltet ist, dass auf das mittels des Trageclips (506, 606, 706, 806) mit dem Halteelement (508, 608, 708, 808) einer Lade- und/oder Kommunikationsvorrichtung (502, 602, 702, 802) verbundene Gerät eine Kraft ausübbar ist, die wenigstens teilweise in Richtung der Lade- und/oder Kommunikationsvorrichtung (502, 602, 702, 802) wirkt.

9. System nach Anspruch 1, 2 oder 8, **dadurch gekennzeichnet, dass** im Gerät federnde Kontaktelemente (504, 604, 704, 804) vorhanden sind, deren Federkraft der über den Trageclip (506, 606, 706, 806) des Gerätes (501, 601, 701, 801) und das Halteelement (508, 608, 708, 808) der Lade- und/oder Kommunikationsvorrichtung (502, 602, 702, 802) auf das Gerät (501, 601, 701, 801) ausgeübten Kraft zumindest teilweise entgegenwirkt.

10. System nach Anspruch 1, 2, 8 oder 9, **dadurch gekennzeichnet, dass** der Trageclip (506, 606, 706, 806) des Geräts (501, 601, 701, 801) so konstruiert ist, dass eine Kraft auf den der Lade- und/oder Kommunikationsvorrichtung (502, 602, 702, 802) zugewandten Bereich des Trageclips (506, 606, 706, 806) wirkt, die zum Gerät (501, 601, 701, 801) hin weist.

11. System nach Anspruch 1, 2, 8, 9 oder 10, **dadurch gekennzeichnet, dass** der Trageclip (506, 606, 706, 806) des Geräts (501, 601, 701, 801) auf der dem Halteelement (508, 608, 708, 808) der Lade- und/oder Kommunikationsvorrichtung (502, 602, 702, 802) zugewandten Seite zumindest in einem Teilabschnitt einen keilartigen Querschnitt aufweist, wobei der schmale Bereich des Keils zur Lade- und/oder Kommunikationsvorrichtung (502, 602, 702, 802) hin weist und der breite Bereich des Keils von der Lade- und/oder Kommunikationsvorrichtung (502, 602, 702, 802) weg weist.

12. System nach Anspruch 1, 2, 8, 9, 10 oder 11, **dadurch gekennzeichnet, dass** der Trageclip (506, 606, 706, 806) des Geräts (501, 601, 701, 801) auf der dem Halteelement (508, 608, 708, 808) der Lade- und/oder Kommunikationsvorrichtung (502, 602, 702, 802) zugewandten Seite eine oder mehrere Hervorhebungen, insbesondere Hervorhebungen mit im Wesentlichen rippen-, halbkreis- oder halbellipsenförmigem Querschnitt (510, 610, 710) aufweist.

13. System nach Anspruch 1, 2, 8, 9, 10, 11 oder 12, **dadurch gekennzeichnet, dass** der Trageclip (506, 606, 706, 806) des Geräts (501, 601, 701, 801) auf der dem Halteelement (508, 608, 708, 808) der Lade- und/oder Kommunikationsvorrichtung (502, 602, 702, 802) zugewandten Seite zumindest teilweise eine geriffelte, gewellte und/oder gummierte Oberfläche (810) aufweist.

## Claims

1. A system consisting of a portable, battery-operated device (501, 601, 701, 801) and a charge and/or communication apparatus (502, 602, 702, 802) for the device, wherein the device has an attachment clip (506, 606, 706, 806) and electrical contacts (503, 603, 703, 803) and the charge and/or communication apparatus (502, 602, 702, 802) is provided with an electrical contact region, into which the device (501, 601, 701, 801) can be inserted via its contacts (503, 603, 703, 803) for electrical connection to the charge and/or communication apparatus (502, 602, 702, 802), and the charge and/or communication apparatus (502, 602, 702, 802) has a holding element (508, 608, 708, 808), wherein the attachment clip (506, 606, 706, 806) of the device (501, 601, 701, 801) inserted into the contact region can be connected to the holding element in a frictionally engaged and/or interlocking manner, **characterised in that** the attachment clip (506, 606, 706, 806) of the device is designed such that, when pressure is exerted onto the region of the attachment clip (506, 606, 706, 806) facing away from the charge and/or communication apparatus, the region of the attachment clip (506, 606, 706, 806) facing towards the charge and/or communication apparatus is moved away from the device (501, 601, 701, 801) and a connection possibly existing between the attachment clip (506, 606, 706, 806) and holding element (508, 608, 708, 808) can be cancelled.

2. The system according to Claim 1, **characterised in that** the attachment clip (506, 606, 706, 806) of the device (501, 601, 701, 801) is automatically connected to the holding element (508, 608, 708, 808) of the charge and/or communication apparatus (502, 602, 702, 802) upon insertion of the device (501, 601, 701, 801) into the charge and/or communication apparatus (502, 602, 702, 802).

3. The system according to Claim 1 or 2, **characterised in that** the holding element (508, 608, 708, 808) of the charge and/or communication apparatuses (502, 602, 702, 802) is designed such that a force can be exerted onto the inserted device (501, 601, 701, 801), which force acts at least in part in the direction of the contact region.

4. The system according to one of Claims 1 to 3, **characterised in that** at least one resilient contact element (504, 604, 704, 804) is provided in the contact region of the charge and/or communication apparatus (502, 602, 702, 802), the spring force of said contact element counteracting at least in part the force exerted by the holding element (508, 608, 708, 808) onto the inserted device (501, 601, 701, 801).

5. The system according to one of Claims 1 to 4, **characterised in that** the holding element of the charge and/or communication apparatus (502, 602, 702, 802) has, in a portion on the side facing towards the attachment clip (506, 606, 706, 806) of the device (501, 601, 701, 801), a wedge-like cross section (509, 609, 611), wherein the narrow region of the wedge points away from the charge and/or communication apparatus (502, 602, 702, 802) and the wide region of the wedge points towards the charge and/or communication apparatus (502, 602, 702, 802).

6. The system according to one of Claims 1 to 5, **characterised in that** the holding element (508, 608, 708, 808) of the charge and/or communication apparatus (502, 602, 702, 802) has, on the side facing towards the attachment clip (506, 606, 706, 806) of the device, one or more protuberances, in particular protuberances having a substantially rib-like, semi-circular or semi-elliptical cross section (709).

7. The system according to one of Claims 1 to 6, **characterised in that** the holding element (508, 608, 708, 808) of the charge and/or communication apparatus (502, 602, 702, 802) has at least in part a fluted, undulating and/or rubberised surface (809) on the side facing towards the attachment clip (506, 606, 706, 806) of the device (501, 601, 701, 801).

8. The system according to Claim 1 or 2, **characterised in that** the attachment clip (506, 606, 706, 806) of the device (501, 601, 701, 801) is formed such that a force can be exerted onto the device connected by means of the attachment clip (506, 606, 706, 806) to the holding element (508, 608, 708, 808) of a charge and/or communication apparatus (502, 602, 702, 802), which force acts at least in part in the direction of the charge and/or communication apparatus (502, 602, 702, 802).

9. The system according to Claim 1, 2 or 8, **characterised in that** resilient contact elements (504, 604, 704, 804) are provided in the device, the spring force of said contact elements counteracting at least in part the force exerted via the attachment clip (506, 606, 706, 806) of the device (501, 601, 701, 801) and the holding element (508, 608, 708, 808) of the charge and/or communication apparatus (502, 602, 702, 802) onto the device (501, 601, 701, 801).

10. The system according to Claim 1, 2, 8 or 9, **characterised in that** the attachment clip (506, 606, 706, 806) of the device (501, 601, 701, 801) is designed such that a force acts on the region of the attachment clip (506, 606, 706, 806) facing towards the charge and/or communication apparatus (502, 602, 702, 802), which force points towards the device (501, 601, 701, 801).

11. The system according to Claim 1, 2, 8, 9 or 10, **characterised in that** the attachment clip (506, 606, 706, 806) of the device (501, 601, 701, 801) has, at least in a portion on the side facing towards the holding element (508, 608, 708, 808) of the charge and/or communication apparatus (502, 602, 702, 802), a wedge-like cross section, wherein the narrow region of the wedge points towards the charge and/or communication apparatus (502, 602, 702, 802) and the wide region of the wedge points away from the charge and/or communication apparatus (502, 602, 702, 802).

12. The system according to Claim 1, 2, 8, 9, 10 or 11, **characterised in that** the attachment clip (506, 606, 706, 806) of the device (501, 601, 701, 801) has, on the side facing towards the holding element (508, 608, 708, 808) of the charge and/or communication apparatus (502, 602, 702, 802), one or more protuberances, in particular protuberances having a substantially rib-like, semi-circular or semi-elliptical cross section (510, 610, 710).

13. The system according to Claim 1, 2, 8, 9, 10, 11 or 12, **characterised in that** the attachment clip (506, 606, 706, 806) of the device (501, 601, 701, 801) has at least in part a fluted, undulating and/or rubberised surface (810) on the side facing towards the holding element (508, 608, 708, 808) of the charge and/or communication apparatus (502, 602, 702, 802).

## Revendications

1. Système constitué d'un appareil portatif fonctionnant sur batterie (501, 601, 701, 801) et d'un dispositif de charge et/ou de communication (502, 602, 702, 802) pour l'appareil,
où l'appareil présente un clip de fixation (506, 606, 706, 806) et des contacts électriques (503, 603, 703, 803),
et le dispositif de charge et/ou de communication (502, 602, 702, 802) est muni d'une partie de contact électrique, dans laquelle l'appareil (501, 601, 701, 801) peut être inséré avec ses contacts (503, 603, 703, 803) pour la liaison électrique avec le dispositif de charge et/ou de communication (502, 602, 702, 802),
et le dispositif de charge et/ou de communication (502, 602, 702, 802) présente un élément de maintien (508, 608, 708, 808),
où le clip de fixation (506, 606, 706, 806) de l'appareil (501, 601, 701, 801) inséré dans la partie de contact peut être relié avec l'élément de maintien par complémentarité de force et de formes,
**caractérisé en ce que**
le clip de fixation (506, 606, 706, 806) de l'appareil est construit de telle sorte que, lors de l'exercice d'une pression sur la partie du clip de fixation (506, 606, 706, 806) opposée au dispositif de charge et/ou de communication, la partie du clip de fixation (506, 606, 706, 806) orientée vers le dispositif de charge et/ou de communication se déplace de l'appareil (501, 601, 701, 801) et une liaison éventuellement établie entre le clip de fixation (506, 606, 706, 806) et l'élément de maintien (508, 608, 708, 808) peut être enlevée.

2. Système selon la revendication 1,caractérisé e ce que le clip de fixation (506, 606, 706, 806) de l'appareil (501, 601, 701, 801) est relié automatiquement avec l'élément de maintien (508, 608, 708, 808) du dispositif de charge et/ou de communication (502, 602, 702, 802) lors de l'insertion de l'appareil (501, 601, 701, 801) dans le dispositif de charge et/ou de communication (502, 602, 702, 802).

3. Système selon les revendications 1 ou 2, **caractérisé en ce que** l'élément de maintien (508, 608, 708, 808) du dispositif de charge et/ou de communication (502, 602, 702, 802) est conçu de telle manière qu'une force peut s'exercer sur l'appareil (501, 601, 701, 801) inséré qui agit au moins partiellement en direction de la partie de contact.

4. Système selon l'une des revendications 1 à 3, **caractérisé en ce que**, dans la partie de contact du dispositif de charge et/ou de communication (502, 602, 702, 802), au moins un élément de contact (504, 604, 704, 804) élastique est présent, dont la force de ressort de la force exercée par l'élément de maintien (508, 608, 708, 808) sur l'appareil (501, 601, 701, 801) inséré agit contre au moins partiellement.

5. Système selon l'une des revendications 1 à 4, **caractérisé en ce que** l'élément de maintien du dispositif de charge et/ou de communication (502, 602, 702, 802) présente une section transversale (509, 609, 611) conique sur au moins une section partielle sur le côté orienté vers le clip de fixation (506, 606, 706, 806) de l'appareil (501, 601, 701, 801), où la partie étroite du cône est dirigée en s'éloignant du dispositif de charge et/ou de communication (502, 602, 702, 802) et la partie large du cône est dirigée vers le dispositif de charge et/ou de communication (502, 602, 702, 802).

6. Système selon l'une des revendications 1 à 5, **caractérisé en ce que** l'élément de maintien (508, 608, 708, 808) du dispositif de charge et/ou de communication (502, 602,702, 802) présente sur le côté orienté vers le clip de fixation (506, 606, 706, 806) de l'appareil un ou plusieurs reliefs, notamment des reliefs avec essentiellement une section (709) en forme de nervures, de demis cercles, respectivement de demies ellipses.

7. Système selon l'une des revendications 1 à 6, **caractérisé en ce que** l'élément de maintien (508, 608, 708, 808) du dispositif de charge et/ou de communication (502, 602, 702, 802) présente une surface (809) sur le côté orienté vers le clip de fixation (506, 606, 706, 806) de l'appareil (501, 601, 701, 801) au moins partiellement striée, ondulée et/ou gommée.

8. Système selon les revendications 1 ou 2, **caractérisé en ce que** le clip de fixation (506, 606, 706, 806) de l'appareil (501, 601, 701, 801) est conçu de sorte qu'une force peut s'exercer sur l'appareil relié au moyen du clip de fixation (506, 606, 706, 806) avec l'élément de maintien (508, 608, 708, 808) d'un dispositif de charge et/ou de communication (502, 602, 702, 802) qui agit au moins partiellement en direction du dispositif de charge et/ou de communication (502, 602, 702, 802).

9. Système selon les revendications 1, 2 ou 8, **caractérisé en ce que** des éléments de contacts (504, 604, 704, 804) élastiques sont présents dans l'appareil, dont la force de ressort agit au moins partiellement contre la force exercée sur l'appareil (501, 601, 701, 801) par l'intermédiaire du clip de fixation (506, 606, 706, 806) de l'appareil (501, 601, 701, 801) et de l'élément de maintien (508, 608, 708, 808) du dispositif de charge et/ou de communication (502, 602, 702, 802).

10. Système selon les revendications 1, 2, 8 ou 9, **caractérisé en ce que** le clip de fixation (506, 606, 706, 806) de l'appareil (501, 601, 701, 801) est construit de telle sorte qu'une force agit sur la partie du clip de fixation (506, 606, 706, 806) orientée vers le dispositif de charge et/ou de communication (502, 602, 702, 802) qui est dirigée vers l'appareil (501, 601, 701, 801).

11. Système selon les revendications 1, 2, 8, 9 ou 10, **caractérisé en ce que** le clip de fixation (506, 606, 706, 806) de l'appareil (501, 601, 701, 801) présente une section transversale conique sur le côté orienté vers l'élément de maintien (508, 608, 708, 808) du dispositif de charge et/ou de communication (502, 602, 702, 802) au moins dans une section partielle, où la partie étroite du cône est dirigée vers le dispositif de charge et/ou de communication (502, 602, 702, 802) et la partie large du cône est dirigée s'éloignant du dispositif de charge et/ou de communication (502, 602, 702, 802).

12. Système selon les revendications 1, 2, 8, 9, 10 ou 11, **caractérisé en ce que** le clip de fixation (506, 606, 706, 806) de l'appareil (501, 601, 701, 801) présente sur le côté orienté vers l'élément de maintien (508, 608, 708, 808) du dispositif de charge et/ou de communication (502, 602, 702, 802) un ou plusieurs reliefs, notamment des reliefs avec essentiellement une section transversale (510, 610, 710, 810)) en forme de nervures, de demis cercles, respectivement de demies ellipses.

13. Système selon les revendications 1, 2, 8, 9, 10, 11 ou 12, **caractérisé en ce que** le clip de fixation (506, 606, 706, 806) de l'appareil (501, 601, 701, 801) présente sur le côté orienté vers l'élément de maintien (508, 608, 708, 808) du dispositif de charge et/ou de communication (502, 602, 702, 802) au moins une surface (810) partiellement striée, ondulée et/ou gommée.
